# EUROPEAN PATENT SPECIFICATION

(11) **EP 1 623 917 B1**
(45) Date of publication and mention of the grant of the patent: **02.07.2008**
(21) Application number: 04254753.9
(22) Date of filing: 06.08.2004
(51) Int. Cl.: B62K 11/10, B62K 25/32

(54) **Improved engine-suspending device**
Motoraufhängungsvorrichtung
Dispositif de suspension de moteur

(43) Date of publication of application: 08.02.2006
(73) Proprietor: Kwang Yang Motor Co., Ltd., San-Min Dist., Kaohsiung City (TW)
(72) Inventor: Yu, Jun-Hsiang, Chienchen District Kaohsiung (TW)
(74) Representative: W.P. Thompson & Co.

(56) References cited:
- EP-A- 0 581 318
- EP-A- 0 755 852
- EP-A- 0 937 636
- JP-A- 60 029 384
- JP-A- 2004 216 926
- US-A- 4 373 602
- US-A- 6 059 305

## Description

The present invention relates to a device for suspending an engine, and more particularly, but not exclusively, to a suspending device for mounting an engine on a frame of a motorcycle.

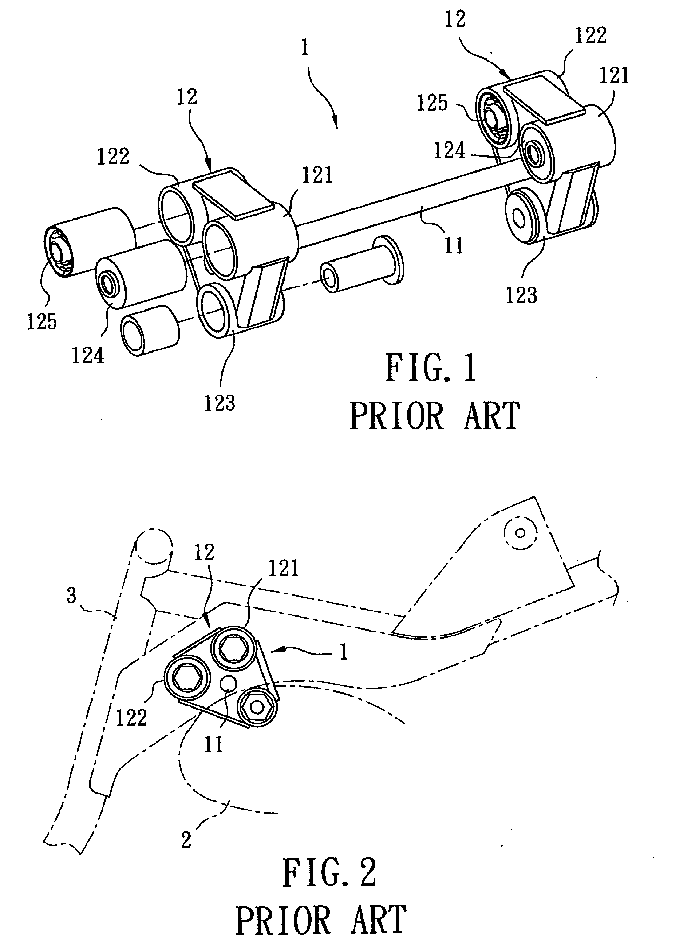

Figures 1 and 2 show a conventional engine suspending device 1 for suspending an engine 2 on a frame 3 of a motorcycle. The engine suspending device 1 includes a main rod 11 and two locking units 12 fixed respectively to two ends of the main rod 11. Each locking unit 12 includes a first mounting seat 121, a second mounting seat 122, an engine mounting seat 123, a rubber sleeve 124 press-fitted in the first mounting seat 121, and a rubber stopper 125 press-fitted in the second mounting seat 122. The first and second mounting seats 121 and 122 are mounted securely on the frame 3. The engine mounting seat 123 is secured to the engine 2.

When the motocycle is actuated, the engine 2 will swing relative to the frame 3. However, due to the anti-torque characteristic of the rubber sleeve 124 and the shock absorbing property of the rubber stopper 125, the vibrational and torsional forces produced by the swinging movement of the engine 2 can be attenuated and the mounting angle of the engine suspending device 1 relative to the frame 3 can be controlled. In other words, since the rubber sleeve 124 is resilient, the torque produced by the swinging of the engine 2 is absorbed by the rubber sleeve 124, thereby preventing the engine suspending device 1 from being damaged due to excessive torsional and vibrational forces produced by the swinging of the engine 2. However, because the rubber sleeve 124 is flexible, it is not active to impede vibrational and torsional forces. Therefore, the suspension device 1 is unable to provide the engine 2 with a sufficiently rigid supporting capacity. This results in instability of the operation of the engine 2 and even negative effects on the operation of the motorcycle.

JP 60 029384A discloses an engine suspending device for mounting an engine on a frame according to the preamble of claim 1.

The present invention seeks to provide an engine suspending device having advantages over known such devices.

According to this invention, there is provided an engine suspending device for mounting an engine on a frame by way of suspension lugs associated with the engine and that have first bearing assemblies provided therein, the device comprising a connecting rod and first and second locking units attached to two opposite ends of the connecting rod, said first and second locking units each including a first sleeve and a second sleeve, said first sleeves being arranged to be secured to the frame, and said second sleeves being arranged to be suspended from said frame,
the device further includes a positioning tube, and a mounting shaft, the positioning tube being arranged to extend through said first bearing assemblies and to be disposed between said second sleeves of said first and second locking units, said mounting shaft being arranged to be inserted into said positioning tube and said second sleeves of said first and second locking units, said mounting shaft having a bolt head, a second male screw thread at one end of said mounting shaft opposite to said bolt head and which is arranged to project outwardly of said second sleeve of said first locking unit, and a locking nut arranged to engage threadedly said second male screw thread; and characterised by:
said mounting shaft further comprising a first male screw thread proximate to said bolt head and engaging threadedly said second sleeve of said second locking unit, said mounting shaft further having a step formation disposed proximate to said first male screw thread, such that, when assembled, the step formation abuts a pull-rod seat arranged to be sleeved around said mounting shaft between said second sleeve or said second locking unit and said positioning tube.

Advantageously, the invention provides for an engine suspending device with an improved rigid structure for supporting a swingable motorcycle engine so as to increase operational stability of the engine.

The invention provides for an engine suspending device for mounting an engine on a frame, by way of two spaced-apart suspension lugs associated with the engine, and including a positioning tube and a mounting shaft wherein the positioning tube extends through first bearing assemblies of the suspension lugs and is disposed between second sleeves of first and second locking units. A mounting shaft is inserted into the positioning tube and the second sleeves. The mounting shaft has a first male screw thread proximate to a bolt head and arranged to engage the second sleeve, a second male screw thread which projects outwardly of the second sleeve, and arranged to engage threadedly with a locking nut.

Other features and advantages of the present invention will become apparent in the following detailed description of a preferred embodiment of the invention.

The invention is now described further hereinafter by way of example only, with reference to the accompanying drawings in which:
Fig. 1 is a perspective view of a conventional engine suspending device for a motocycle;
Fig. 2 is a sideviewof the conventional engine suspending device;
Fig. 3 is an exploded view of an engine suspending device embodying the present invention;
Fig. 4 is a sectional view of the engine suspending device of Fig. 3; and
Fig. 5 is a schematic view of the engine suspending device mounted on a frame of a motocycle.

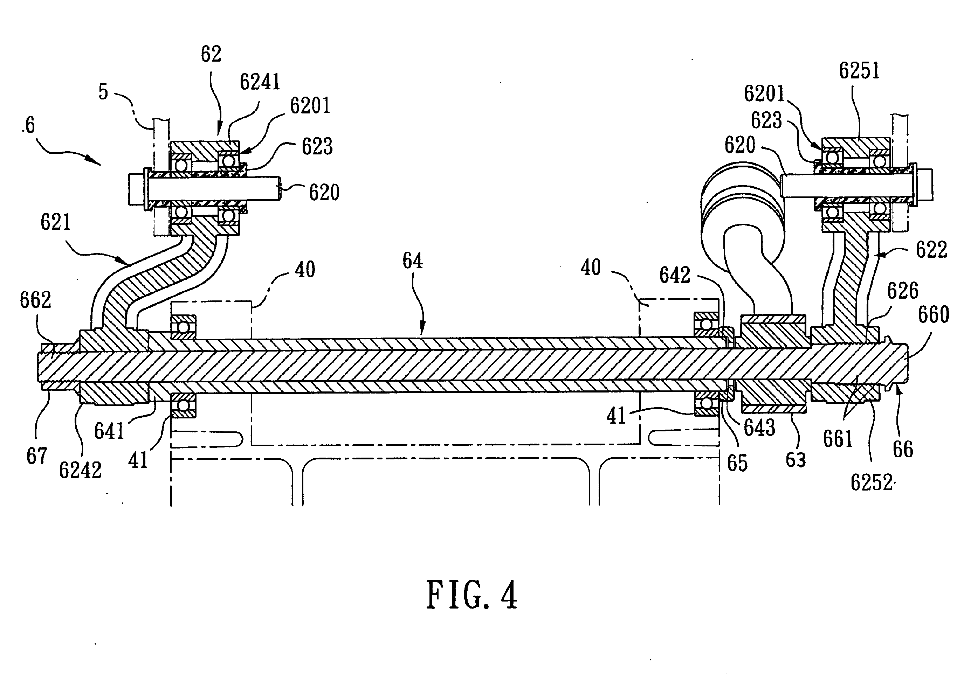

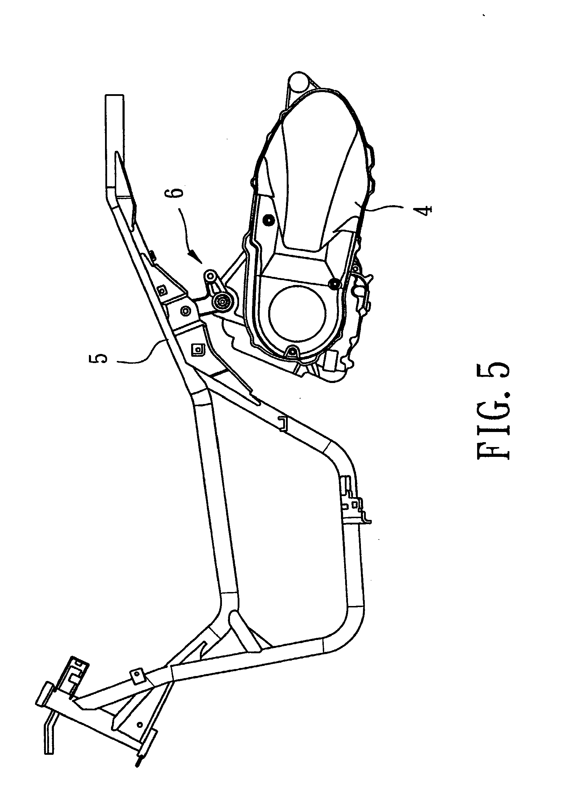

Referring to Figures 4 and 5, an engine suspending device 6 embodying the present invention is shown to be installed on a frame 5 of a motocycle for suspending an engine 4. The engine 4 has two spaced apart suspension lugs 40 respectively incorporating first bearing assemblies 41.

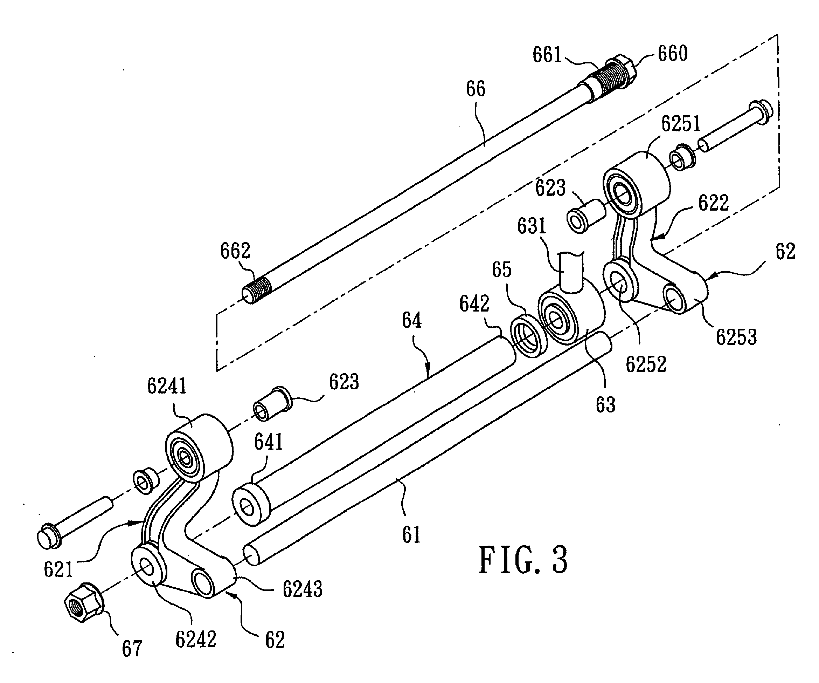

Referring to Figures 3 and 4, the engine suspending device 6 includes a connecting rod 61 disposed above the suspension lugs 40 and having a length larger than the spacing between the suspension lugs 40, a securing assembly 62, a pull rod seat 63, a positioning tube 64 inserted into the first bearing assemblies 41, a positioning shroud 65, and a mounting shaft 66.

The securing assembly 62 includes a first locking unit 621, and a second locking unit 622. The first and second locking units 621, 622 include respectively first sleeves 6241 and 6251 which are secured to the frame 5, second sleeves 6242 and 6252 for connection with the mounting shaft 66, and third sleeves 6243 and 6253 connected to two opposite ends of the connecting rod 61. Each first sleeve 6241 or 6251 is secured to the frame 5 by means of a locking bolt 620 and a bearing assembly 6201. A rubber sleeve 623 is fitted between each locking bolt 620 and the corresponding bearing assembly 6201 to provide anti-torque and shock absorbing effects.

The positioning tube 64 is inserted into the first bearing assemblies 41 of the suspension lugs 40 of the engine 4, and includes an enlarged head end 641 and a tail end 642 which project outwardly and respectively from the first bearing assemblies 41 of the suspension lugs 40. The enlarged head end 641 is in abutment with the adjacent first bearing assembly 41. The tail end 642 is covered by the positioning shroud 65. The positioning shroud 65 abuts tightly against the adjacent corresponding first bearing assembly 41. A clearance 643 is provided between the end face of the tail end 642 and the positioning shroud 65 in order to ensure that the positioning shroud 65 is in tight abutment with the corresponding first bearing assembly 41.

The positioning tube 64 with the bearing assemblies 41 is placed between the second sleeves 6242, 6252 of the first and second locking units 621, 622. The pull rod seat 63 is connected to a pull rod 631 to abut against the frame 5 and is placed between the second sleeve 6252 of the second locking unit 622 and the positioning shroud 65. Themounting shaft 66 is provided for insertion into the positioning tube 64 and includes a bolt head 660, a first male screw thread 661 proximate to the bolt head 660 and a second male screw thread 662 at an end opposite to the bolt head 660.

In assembly, the mounting shaft 66 is inserted sequentially into the second sleeve 6252 of the second locking unit 622, the pull rod seat 63, the positioning tube 64 and the second sleeve 6242 of the first locking unit 621 so that the bolt head 660 is placed adjacent to the second sleeve 6252, the first male screw thread 661 engages threadedly the second sleeve 6252, and the second male screw thread 662 projects outwardly of the second sleeve 6242. A locking nut 67 is sleeved on the mounting shaft 66 and engages the second male screw thread 662 so as to secure together the components disposed on the mounting shaft 66.

Due to the threaded engagement between the first male screw thread 661 and the second sleeve 6252 of the second locking unit 622 and the engagement of the locking nut 67 with the second male screw thread 662, all of the components sleeved around the mounting shaft 66 are tightly pressed against each other so that the entire assembly of the engine suspending device 6 forms a robust structure which possesses rigid supporting capacity.

When the engine 4 swings during movements of the motocycle, the rubber sleeves 623 serve to absorb torsional and vibrational forces induced by the swinging movement of the engine 4. In addition, because of the rigid supporting effects of the engine suspending device 6, the swinging amplitudes of the engine 4 can be reduced and the swinging movement of the engine 4 can be regulated and stabilized.

## Claims

1. An engine suspending device for mounting an engine (4) on a frame (5) by way of suspension lugs (40) associated with the engine (4) and that have first bearing assemblies (41) provided therein, the device comprising a connecting rod (61) and first and second locking units (621, 622) attached to two opposite ends of the connecting rod (61), said first and second locking units each including a first sleeve (6241, 6251) and a second sleeve (6242, 6252), said first sleeves (6241, 6251) being arranged to be secured to the frame (5), and said second sleeves (6242, 6252) being arranged to be suspended from said frame (5),
the device further includes a positioning tube (64), and a mounting shaft (66), the positioning tube (64)being arranged to extend through said first bearing assemblies (41) and to be disposed between said second sleeves (6242, 6252) of said first and second locking units, said mounting shaft (66) being arranged to be inserted into said positioning tube (64) and said second sleeves (6242, 6252) of said first and second locking units, said mounting shaft (66) having a bolt head (660), a second male screw thread (662) at one end of said mounting shaft (66) opposite to said bolt head (660) and which is arranged to project outwardly of said second sleeve (6242) of said first locking unit (621), and a locking nut (67) arranged to engage threadedly said second male screw thread (662); and **characterised by**:
said mounting shaft (66) further comprising a first male screw thread (661) proximate to said bolt head (660) and engaging threadedly said second sleeve (6252) of said second locking unit (622), said mounting shaft (66) further having a step formation disposed proximate to said first male screw thread (661), such that, when assembled, the step formation abuts a pull-rod seat (63) arranged to be sleeved around said mounting shaft (66) between said second sleeve (6252) or said second locking unit (622) and said positioning tube (64).

2. A device as claimed in Claim 1, wherein said positioning tube (64) includes an enlarged head end (641) arranged to be in abutment with one of said first bearing assemblies (41) and said second sleeve (6242) of said first locking unit (621) a tail end (642) arranged to project outwardly of the other one of said bearing assemblies (41), and a positioning shroud (65) arranged to cover said tail end (642) and to be in abutment with said second sleeve (6252) of said second locking unit (622) and said other one of said first bearing assemblies (41).

3. A device as claimed in Claim 1 or 2, further including two locking bolts (620) each of which is arranged to be inserted into one of said first sleeves (6241, 6251) of said first and second locking units (621, 622) and to be attached to the frame (5), two second bearing assemblies (6201) each of which is arranged to be disposed between one of said locking bolts (620) and a corresponding one of said first sleeves (6241, 6251) of said first and second locking units, and two rubber sleeves (623) each of which is arranged to be fitted between one of said second bearing assemblies (6201) and a corresponding one of said locking bolts (620) so as to absorb vibrational and torsional forces induced by the swinging movements of the engine (4).

## Patentansprüche

1. Motoraufhängungsvorrichtung zum Anbringen eines Motors (4) an einem Rahmen (5) mittels Aufhängungsansatzstücken (40), die mit dem Motor (4) verknüpft sind und die in denselben vorgesehene erste Lagerbaugruppen (41) aufweisen, wobei die Vorrichtung eine Verbindungsstange (61) und eine erste und zweite Verriegelungseinheit (621, 622) befestigt an zwei entgegengesetzten Enden der Verbindungsstange (61) aufweist, die erste und zweite Verriegelungseinheit jeweils eine erste Hülse (6241, 6251) und eine zweite Hülse (6242, 6252) umfasst, die ersten Hülsen (6241, 6251) eingerichtet sind, um an dem Rahmen (5) befestigt zu werden, und die zweiten Hülsen (6242, 6252) eingerichtet sind, um von dem Rahmen (5) aufgehängt zu werden,
wobei die Vorrichtung weiter ein Positionierungsrohr (64) und einen Einbauschaft (66) umfasst, das Positionierungsrohr (64) eingerichtet ist, um sich durch die ersten Lagerbaugruppen (41) zu erstrecken und zwischen den zweiten Hülsen (6242, 6252) der ersten und zweiten Verriegelungseinheit angeordnet zu werden, der Einbauschaft (66) eingerichtet ist, um in das Positionierungsrohr (64) und die zweiten Hülsen (6242, 6252) der ersten und zweiten Verriegelungseinheit eingeführt zu werden, wobei der Einbauschaft (66) einen Bolzenkopf (660), ein zweites Außengewinde (662) an einem Ende des Einbauschafts (66) entgegengesetzt dem Bolzenkopf (660), das eingerichtet ist, um nach außen von der zweiten Hülse (6242) der ersten Verriegelungseinheit (621) vorzustehen, und eine Verriegelungsmutter (67) umfasst, die zum Gewindeeingriff mit dem zweiten Außengewinde (662) eingerichtet ist; und **dadurch gekennzeichnet, dass**
der Einbauschaft (66) weiter ein erstes Außengewinde (661) in der Nähe des Bolzenkopfs (660) aufweist und mit der zweiten Hülse (6252) der zweiten Verriegelungseinheit (622) in Gewindeeingriff tritt, wobei der Einbauschaft (66) weiter eine Stufenausbildung aufweist, die nahe dem ersten Außengewinde (661) angeordnet ist, so dass die Stufenausbildung nach Zusammenbau an einen Zugstangensitz (63) anstößt, der eingerichtet ist, um hülsenartig den Einbauschaft (66) zwischen der zweiten Hülse (6252) oder der zweiten Verriegelungseinheit (622) und dem Positionierungsrohr (64) zu umschließen.

2. Vorrichtung nach Anspruch 1, bei der das Positionierungsrohr (64) ein vergrößertes Kopfende (641), das eingerichtet ist, um in Anlage mit einer der ersten Lagerbaugruppen (41) und der zweiten Hülse (6242) der ersten Verriegelungseinheit (621) zu sein, ein Hinterende (642), das eingerichtet ist, um nach außen von der anderen der Lagerbaugruppen (41) vorzustehen, und eine Positionierungsabdeckung (65) umfasst, die angeordnet ist, um das Hinterende (642) zu bedecken und mit der zweiten Hülse (6252) der zweiten Verriegelungseinheit (622) und der anderen der ersten Lagerbaugruppen (41) in Anlage zu sein.

3. Vorrichtung nach Anspruch 1 oder 2, die weiter zwei Verriegelungsbolzen (620), von denen jeder eingerichtet ist, um in eine der ersten Hülsen (6241, 6251) der ersten und zweiten Verriegelungseinheit (621, 622) eingeführt und an dem Rahmen (5) befestigt zu werden, zwei zweite Lagerbaugruppen (6201), von denen jede eingerichtet ist, um zwischen einem der Verriegelungsbolzen (620) und einer entsprechenden der ersten Hülsen (6241, 6251) der ersten und zweiten Verriegelungseinheit angeordnet zu werden, und zwei Gummihülsen (623) umfasst, von denen jede eingerichtet ist, um zwischen eine der zweiten Lagerbaugruppen (6201) und einem entsprechenden der Verriegelungsbolzen (620) eingesetzt zu werden, um so Vibrations- und Torsionskräfte zu absorbieren, die durch die Schwenkbewebungen des Motors (4) hervorgerufen werden.

## Revendications

1. Dispositif de suspension de moteur permettant de monter un moteur (4) sur un bâti (5) par le biais de tenons de suspension (40) associés au moteur (4) et ayant des premiers ensembles paliers (41) mis en oeuvre dedans, le dispositif comportant une bielle (61) et des premières et deuxièmes unités de verrouillage (621, 622) attachées aux deux extrémités opposées de la bielle (61), lesdites premières et deuxièmes unités de verrouillage comprenant chacune un premier manchon (6241, 6251) et un deuxième manchon (6242, 6252), lesdits premiers manchons (6241, 6251) étant arrangés pour être assujettis au bâti (5), et lesdits deuxième manchons (6242, 6252) étant arrangés pour être suspendus par rapport au châssis (5),
le dispositif comprend par ailleurs un tube de positionnement (64), et un arbre de montage (66), le tube de positionnement (64) étant arrangé pour s'étendre au travers desdits premiers ensembles paliers (41) et pour être disposé entre lesdits deuxièmes manchons (6242, 6252) desdites premières et deuxièmes unités de verrouillage, ledit arbre de montage (66) étant arrangé pour être inséré dans ledit tube de positionnement (64) et lesdits deuxièmes manchons (6242, 6252) desdites premières et deuxièmes unités de verrouillage, ledit arbre de montage (66) ayant une tête de boulon (660), un deuxième filet extérieur (662) au niveau d'une extrémité dudit arbre de montage (66) de manière opposée par rapport à ladite tête de boulon (660) et qui est arrangé pour se projeter vers l'extérieur par rapport audit deuxième manchon (6242) de ladite première unité de verrouillage (621), et un écrou de verrouillage (67) arrangé pour entrer en contact par filetage avec ledit deuxième filet extérieur (662) ; et **caractérisé par** :
ledit arbre de montage (66) comportant par ailleurs un premier filet extérieur (661) à proximité de ladite tête de boulon (660) et entrant en contact par filetage avec ledit deuxième manchon (6252) de ladite deuxième unité de verrouillage (622), ledit arbre de montage (66) ayant par ailleurs une formation de type gradin disposée à proximité dudit premier filet extérieur (661), de telle manière que, après assemblage, la formation de type gradin vient prendre appui sur un siège de bielle de commande (63) arrangé pour être glissé autour dudit arbre de montage (66) entre ledit deuxième manchon (6252) ou ladite deuxième unité de verrouillage (622) et ledit tube de positionnement (64).

2. Dispositif selon la revendication 1, dans lequel ledit tube de positionnement (64) comprend une extrémité à tête élargie (641) arrangée pour être en appui sur l'un quelconque desdits premiers ensembles paliers (41) et dudit deuxième manchon (6242) de ladite première unité de verrouillage (621), une extrémité arrière (642) arrangée pour se projeter vers l'extérieur par rapport à l'autre quelconque desdits ensembles paliers (41), et une gaine de positionnement (65) arrangée pour recouvrir ladite extrémité arrière (642) et pour être en appui sur ledit deuxième manchon (6252) de ladite deuxième unité de verrouillage (622) et ledit autre quelconque desdits premiers ensembles paliers (41).

3. Dispositif selon la revendication 1 ou la revendication 2, comprenant par ailleurs deux boulons de verrouillage (620), chacun d'entre eux étant arrangé pour être inséré dans l'un quelconque desdits premiers manchons (6241, 6251) desdites premières et deuxièmes unités de verrouillage (621, 622) et pour être attaché au bâti (5), deux deuxièmes ensembles paliers (6201), chacun d'entre eux étant arrangé pour être disposé entre l'un quelconque desdits boulons de verrouillage (620) et l'un quelconque correspondant desdits premiers manchons (6241, 6251) desdites premières et deuxièmes unités de verrouillage, et deux manchons en caoutchouc (623), chacun d'entre eux étant arrangé pour être placé entre l'un quelconque desdits deuxièmes ensembles paliers (6201) et l'un quelconque correspondant desdits boulons de verrouillage (620) de telle manière à absorber les forces de vibration et de torsion provoquées par les mouvements de balancement du moteur (4).
